# NEUE EUROPÄISCHE PATENTSCHRIFT

(11) **EP 1 559 693 B2**
(45) Veröffentlichungstag und Bekanntmachung des Hinweises auf die Entscheidung über den Einspruch: **13.04.2016**
(45) Hinweis auf die Patenterteilung: 18.06.2008
(21) Anmeldenummer: 04027737.8
(22) Anmeldetag: 23.11.2004
(51) Int. Cl.: C03C 8/14, C09D 5/38, C04B 41/51, C03C 17/06, B44C 1/16, C09D 179/02, B44C 1/10, C03C 8/10

(54) **Edelmetallpräparate und Lüsterpräparate für den direkten und indirekten Siebdruck**
Precious metal composition and luster composition for direct and indirect screen printing
Composition de métal précieux et composition brillante pour la sérigraphie directe ou indirecte

(30) Priorität: 17.12.2003 DE 10359448; 06.04.2004 DE 102004017335
(43) Veröffentlichungstag der Anmeldung: 03.08.2005
(73) Patentinhaber: Heraeus Deutschland GmbH & Co. KG, 63450 Hanau (DE)
(72) Erfinder: Landgraf, Günter Dr., 63454 Hanau (DE); Wissel, Sabine, 63796 Kahl am Main (DE); Wenzel, Patrick, 63808 Haibach (DE); Lukas, Annette, 63517 Rodenbach (DE); Werner, Günter, 63450 Hanau (DE); Duchac, Johann, 63477 Maintal (DE)
(74) Vertreter: Muth, Heinz-Peter

(56) Entgegenhaltungen:
- EP-A- 0 514 073
- EP-A- 0 857 707
- EP-A- 0 972 793
- EP-A2- 0 863 187
- DE-A1- 10 146 684
- DE-C1- 3 616 547
- US-A- 4 048 375
- US-A- 4 689 374
- US-A- 4 914 164
- US-A- 5 350 826
- US-A- 5 767 176
- US-A- 5 811 219
- US-A1- 2003 104 880
- US-B1- 6 224 898
- US-B1- 6 399 282
- US-B2- 7 943 705
- Chem-Plast S.p.A. "Resine Poliammidiche Fluide - Generalita", October 1982
- Huntsman, Merkblatt Aradur® 350# von April 2004
- http://www.huntsman.com/advanced_materials/ Media/SG_EMEA_APAC_AMBIENT051025.pdf;Huntsm an,Product Range Aradur von März 2005
- Produktverzeichnis der Euroinks S.r.l., undatiert
- "Edelmetallzubereitungen und Lüster", Auszug aus Verband der Mineralfarbenindustrie, 1998
- J. FALBE, PROF., DR. ET AL.: 'Römpp Chemie lexikon', Bd. 9, GEORG THIEME VERLAG, STUTTGART - NEW YORK Seiten 4892 - 4894
- Römpp Chemie, "Polyaminoamide"
- Römpp Chemie Lexikon, 9. Auflage, "Polyamide" und "Polyaminoamide"
- Vantico, Sicherheitsdatenblatt zu ARADUR 350 BD vom 26.02.2003
- Auszüge aus www.huntsman.com/advanced_materials.com
- technische Broschüre Versamid® 940
- technische Broschüre Versamid® 971
- 'Ullmanns Encyklopädie der technischen Chemie', Bd. 4, 1976 Seiten 552 - 553
- Römpp Chemie Lexikon, 9. Auflage, "Aliphatische Verbindungen"

## Beschreibung

Die Erfindung betrifft Edelmetallpräparate und Lüsterpräparate und diese enthaltende Abziehbilder, die bevorzugt beim indirekten und direkten Siebdruck eingesetzt werden.

Edelmetallpräparate zur Dekoration von Glas, Keramik, Porzellan, Bone-China, Fltesen oder anderen silikatischen Substraten bestehen in der Regel aus Lösungen organischer Gold-, Palladium- und Platlnverbindungen (die in zumeist organischen Trägermaterialien gelöst sind), Kunst- oder Naturharzen sowie Flussmitteln, die die Haftfestigkeit auf dem jeweiligen Trägermaterial sicherstellen. Als Flussmittel werden üblicherweise bestimmte organische Metallverbindungen, z. B. Alkoholate, Carboxylate, Resinate oder Sulforesinate der Elemente Rhodium, Silber, Chrom, Wismut, Vanadium, Sillcium usw. verwendet. Beim Einbrennen zersetzen sich die organischen Verbindungen zu den jeweiligen Oxiden oder Metallen, wodurch die Haftfestigkeit und optischen Eigenschaften des Metallfilms auf dem Substrat bewirkt werden.

Beim Dekorieren von silikatischen Substraten wie Glas, Keramik, Porzellan und Bone-China mit keramischen Farben unterscheidet man die Art der Auftragung. So sind neben der Dekoration von Hand mittels Pinselauftrag, Stempeln, Neoprenübertragung, Netschsysteme, Tampondruck - direkt und indirekt - auch Siebdruckverfahren üblich. Aufgrund der vielfältigen Anwendungen und Vorteile des Siebdrucks zählt dieses Verfahren zu einem der gängigsten. Hierbei wiederum unterscheidet man den direkten vom indirekten Siebdruck. Beim direkten Siebdruck wird mittels einer Schablone auf das zu dekorierende Substrat direkt gedruckt und dieser Vorgang ggf. mit weiteren Pasten wiederholt. Beim indirekten Siebdruck druckt man mit einer Schablone auf ein spezielles Papier, welches entweder mit einer Dextrin- oder einer Wachsschicht beschichtet ist Der Vorteil dieses Verfahrens ist die Möglichkeit, passgenau mehrere Farben zu drucken und so anspruchsvolle Designs herzustellen. Um die so erzeugten Dekore applizieren zu können, benötigt man eine Lackmaske, die ebenfalls per Siebdruck aufgetragen werden kann. Die so erzeugten Abziehbilder - werden im Falle des Druckes auf ein mit Dextrin beschichtetes Papier - durch Einweichen in Wasser vom Trägerpapier oder im Falle des Druckes auf die Wachsschicht durch rückseitige Erwärmung abgelöst Anschließend werden die Dekore auf die jeweiligen Substrate übertragen. Im erstgenannten Fall muss sichergestellt sein, dass kein Wasser mehr unter dem Abziehbild vor dem Einbrand vorhanden ist (dieses würde beim Erhitzen zu Wasserdampf, der Löcher in das Dekor reißen kann). Im anderen Fall verbleibt eine geringe Menge an Wachs unter dem Abziehbild, das beim Einbrand mit verbrennt.

In EP 863 187B1, Absatz [0020], werden mögliche Bindemittel für flüssige oder pastenförmige Dekorfarben aufgezählt, daruntereine Reihe Homo-, Co- und Block-Copolymere - u.a. Polyamide - die ggf. löslich machende Gruppen enthalten können, darunter Amino- oder Ammoniumgruppen.

In DE 101 46 684A1 werden Aminoharze als Bindemittel für Präparate für den Direktdruck erwähnt.

EP0972793 offenbart ein im Handel erhältliches Glanzgoldpräparat für den indirektdruck auf Glas und Bone China, das Produkt GGP 1230 der Firma Heraeus enthält Amidgruppen, die die Anwesenheit eines Polyamid wahrscheinlich machen.

Für den direkten und indirekten Siebdruck müssen die Präparate bestimmte Eigenschaften aufweisen und Anforderungen erfüllen, die im folgenden näher erläutert werden.

Polyamid und Kolophoniumharz enthaltende Edelmetallpräparate, die für den Siebdruck geeignet sind, sind z.B. in DE 198 31 141 A1, DE 198 31 141 C2 und EP 514073 A2 beschrieben. Solche Edelmetallpräparate neigen zu Alterungseffekten, d.h. mit der Lagerzeit nimmt die Viskosität der Präparate zu, wobei es sich hierbei um eine Funktion der Temperatur handelt. Dies kann in relativ kurzer Zeit auch bei Raumtemperatur dazu führen, dass diese Produkte für die Herstellung von Abziehbildern ungeeignet sind und unbrauchbar werden. Gerade beim Transport und Versand in Länder mit hohen Durchschnittstemperaturen reagieren die Präparate schneller nach und dicken stark ein. Des weiteren neigen viele Präparate auch im gedruckten Abziehbild zur Alterung in Form von Versprödungen, die sich durch Rissbildung beim Applizieren und im Ausbrand zeigen. Ebenfalls nicht unerheblich ist die beim Drucken der Präparate teilweise eintretende Eindickung der Produkte durch oxidative Reaktionen, die neben dem Viskositätsanstieg durch den Lösungsmittelverlust auftreten kann.

Es besteht weiter ein Bedarf nach Präparaten, welche die genannten Nachteile nicht aufweisen bzw. die alterungs- und temperaturbeständiger sind.

Es wurde gefunden, dass Edelmetallpräparate, welche Polyaminoamide enthalten, überraschend alterungsbeständig sind und alle weiteren Anforderungen, die an Pasten für den Siebdruck - direkt und indirekt - gestellt werden, in ausgezeichneter Form erfüllen.

Polyaminoamide sind als Epoxidhärter bekannt (Veröffentlichung der Bakelit-AG, S. 5, Spalte 3, DE 37 11 947 A1). Bei "Polyaminoamid en" im Sinne handelt es sich um Reaktionsprodukte der Erfindung aus der Kondensationsreaktion zwischen einerpolymeren Fettsäure, wie z.B. einer dimeren odertrimeren Säure, und Polyethylen-polyamin. Da in diesem Beispiel die polymere Fettsäure eine Mischung aus etwa 70 bis 80 Gew.% Dimer, ca. 15 bis 25 Gew.% Trimer und Tetramer, und weniger als 10 Gew.% Monomer ist, erhält man eine Menge verschiedener Polyaminoamide, die wieder von Art und Menge des eingesetzten Polyamins abhängen. Insofern kann eine genaue Strukturformel nicht angegeben werden.

In Frage für die erfindungsgemäße Anwendung kommen in erster Linie Vertreter der Verbindungsklasse "Potyaminoamide", deren Viskosität kompatibel mit dem Einsatz in Edelmetallpräparaten ist

Ein besonderer Vorteil der Verwendung von Polyaminoamiden in Glanzedelmetallpräparaten ist, dass man Formulierungen ganz ohne die üblichen Zusätze natürlicher Harze (wie Kolophonium oder Dammarharz) herstellen kann. Man ist auf diese Weise auf der einen Seite unabhängig von den Qualitätsschwankungen, denen solche Naturstoffe unterliegen. Auf der anderen Seite sind die aus dem Stand der Technik bekannten Bindemittelsysteme für Präparate für den indirekten Siebdruck aus relativ vielen Komponenten hergestellt, die aufwendig beschafft und gemischt bzw. chemisch umgesetzt werden müssen.

Das Problem bzw. die Herausforderung bei der Bereitstellung einer Abziehbilderpaste besteht aber in erster Linie darin, dass die gedruckten Abziehbilder sehr flexibel und elastisch sein müssen und von der Lackmaske nicht angegriffen werden dürfen sowle dass keine Brennstörungen durch diese entstehen dürfen. Diese Eigenschaften erreichte man bislang nur mit den oben beschriebenen aufwendigen Bindemittelsystemen. Erfindungsgemäß wird dies durch Zugabe einer einzigen Harzklasse möglich.

Zweckmäßig setzt man 3 bis 50 Gew-% Polyaminoamid in den Präparaten ein, bevorzugt 3 bis 30 Gew.%, besonders bevorzugt 3 bis 20% eines Umsetzungsprodukts des Polyaminoamids mit einer mindestens aequlmolaren Menge Carbonsäure in Gegenwart eines Lösungsmittels, wie etwa in Beispiel 1 oder 4 beschrieben.

Es ist weiter von Vorteil, die Polyaminoamide so einzusetzen, dass die Aminofunktionen zunächst inaktiviert oder teilweise inaktiviert sind, denn durch die freien Aminogruppen kann es in Verbindung mit den metallorganischen Anteilen des Edelmetallpräparats zu unerwünschter Polymerisation kommen. Hierbei kann es auch von Vorteil sein, über das stöchiometrische Verhältnis hinaus einen inaktivator zuzugeben, der die Aminogruppen blockiert

Die inaktivatoren werden zweckmäßig aequimolar zu den freien Aminogruppen eingesetzt, es kann aber auch ein geringer Unterschuss oder Überschuss bis zu großen Überschüssen eingesetzt werden, z.B. ein 2- bis 5-facher molarer Überschuss, besonders ein 2- bis 4-facher Überschuss.

Eine Möglichkeit der Blockierung der Aminogruppen ist im einfachsten Fall durch die protonierte Form zu erreichen. Dazu wird das Polyaminoamid in einem Lösungsmittel eingesetzt, das eine Säure enthält. Neben den üblichen Carbonsäuren wie Essig-, Ameisen-, Benzoe- oder Zitronensäure kommen dafür auch exotischere Säuren wie z.B. 2-Ethylhexylcarbonsäure oder Furancarbonsäure in Frage, aber auch Dicarbonsäuren. Ferner kann auch eine kontrollierte Menge eines Epoxids zum Zweck der inaktivierung eingesetzt werden. Durch die Reaktion mit der Epoxygruppe wird die Aminfunktion ebenfalls inaktiviert.

Als inaktivatoren eignen sich auch natürliche Komponenten, die ohnehin in Edelmetallpräparaten eingesetzt werden, wie z.B. geschwefeltes Dammarharz, und überraschenderweise sogar Basen wie Natronlauge. Verwendet man diese, so ist der Einsatz von 6 bis 20 % eine 50 % Natronlauge zweckmäßig.

Zusätzlich zu den Polyaminoamiden können die erfindungsgemäßen Präparate die auf diesem Gebiet üblichen ingredienzien enthalten, z.B. Metallresinate, metallorganische Verbindungen, natürliche Harze, künstliche Harze, Harzöle, organische Farb- und Füllstoffe, Thixotropiemittel, Lösungsmittel und Entschäumer enthalten.

Die Präparate enthalten z.B. eine oder mehrere lösliche Verbindungen der Edelmetalle aus der Reihe Gold, Silber, Ruthenium, Rhodium, Palladium, Osmium, iridium und Platin. Es ist aber auch der Zusatz in elementarer Form möglich. Die Edelmetallverbindungen liegen üblicherweise in Form organischer Verbindungen vor, in welchen das Edelmetall über eine Schwefel- oder Sauerstoffbrücke an ein organisches Gerüst gebunden ist Da es sich häufig um Stoffgemische handelt, werden diese als Edelmetall-Resinate und Edelmetall-Sulforesinate bezeichnet Bei den Flussmitteiverbindungen handelt es sich insbesondere um Resinate und Sulforesinate von Elementen der dritten bis fünften Hauptgruppe und dritten bis achten Nebengruppe des Periodensystems. Bei den Trägermedien handelt es sich meistens um eine Kombination aus mindestens einem Lösungsmittel und einem Bindemittel. Das flüssige Trägermedium kann rein organisch, organisch-wässrig oder im wesentlichen rein wässrig sein. Bei den organischen Medien handelt es sich oft um solche auf der Basis von Kohlenwasserstoffen, Alkoholen und schwefelhaltigen Verbindungen, wie geschwefelten Terpenkohienwasserstoffen und Terpenalkohole sowie geschwefelten natürlichen Harzen, die dann gleichzeitig als Bindemittel dienen und die optischen und mechanischen Eigenschaften der eingebrannten Dekore beeinflussen sowie für die Verarbeitungseigenschaften der Präparate eine wesentliche Rolle spielen.

Der Edelmetallgehalt der Präparate liegt zumeist im Bereich von 6 bis 16 Gew.% Edelmetalle, bezogen auf das Präparat, vorzugsweise im Bereich von 8 bis 15 Gew.-% und besonders bevorzugt im Bereich von 9 bis 12 Gew.-%.

Im Fall der Lüsterpräparate liegt der Edelmetallgehalt unter 6 %, bzw. je nach Farbton und Zusammensetzung kann es sich auch um edelmetallfreie Produkte handeln.

Bei den in den erfindungsgemäßen Glanzedelmetallpräparaten enthaltenen Edelmetallverbindungen handelt es sich um organische Verbindungen, welche in dem anwesenden organischen, organisch-wässrigen oder im wesentlichen wässrigen Medium löslich sind. Bei den organischen Edelmetallverbindungen handelt es sich insbesondere um solche, in welchen das Edelmetall über eine Schwefel- oder Sauerstoffbrücke an ein organisches Gerüst gebunden ist. Insbesondere handelt es sich um sogenannte Sulforesinate, welche aus der Umsetzung einer Goldverbindung mit einer geschwefelten harzartigen Verbindung resultieren, sowie um Thioester und insbesondere um Thiolate auf der Basis aliphatischer, cycloaliphatischer und aromatischer Mercaptane. Sofern das Edelmetallpräparat ein wässriges oder organisch-wässriges Medium enthält, weist die organische Edelmetallverbindung zusätzlich löslichmachende Gruppen aus der Reihe -COOH-, -SO₃H, -OH, -CONH₂, -NH₂ und -OP(O)(OH)₂ auf. In einem organischen Trägermedium lösliche organische Edelmetallverbindungen sind der Fachwelt allgemein bekannt, beispielhaft wird auf die eingangs zitierten Dokumente verwiesen. In einem wässrigorganischen Trägermedium lösliche Goldverbindungen sind aus der EP-B 0 514 073 und EP-B 0 668 265 bekannt.

Außer den organischen Edelmetallverbindungen können die erfindungsgemäßen Präparate organische oder/und anorganische Unedelmetallverbindungen enthalten, welche im Präparat löslich sind und unter den Brennbedingungen das entsprechende Elementoxid bilden. Die Auswahl des organischen oder anorganischen Rests dieser Unedelmetallverbindungen kann frei erfolgen, solange die Verbindung in dem gewählten Trägermedium homogen löslich ist und die Verbindung beim Ausbrand rückstandsfrei unter Bildung des Elementoxids zersetzlich ist. Ähnlich wie bei den Edelmetallverbindungen kann es sich hierbei um niedermolekulare Alkoholate und Thiolate sowie um sogenannte Resinate und Sulforesinate handeln. Etliche Flusselemente, darunter Kobalt und Chrom, können auch in der Form von Salzen aliphatischer oder aromatischer Carbonsäuren wie Ethylhexanoate oder Octanoate, oder Komplexen mit aliphatischen Diketonen, wie beispielsweise Pentandionate oder Mischungen dieser Verbindungen eingesetzt werden. Anorganische Flussmittel können in Präparaten mit einem wässrigen oder wässrigorganischen Medium eingesetzt werden. Organische und/oder anorganische Unedelmetallver bindungen enthalten in der Regel Metallionen der Gruppen 3a und b, 4a und b, 5a und b, 6b, 7b, 8b, 1 b und 2b. Edelmetallpräparate können somit mindestens ein weiteres Element aus der Gruppe Ru, Si, Zr, V, Cr, Os, Ni, Mn, Fe, Co, Bi, W, Ce, Ta, Mo, Ba, B, Pb, Ge, Ca, Ir, Al, Ti, Cu, Sn, Zn, Ga in Form organischer und/oder anorganischer Verbindungen aufweisen, die der Modifizierung der Glanz- und Farbtoneigenschaften sowie der Verbesserung der mechanischen und chemischen Beständigkeit dienen. Bevorzugt sind etwa bei Glanzpräparaten eine oder mehrere Verbindungen der Elemente der Reihe Bor und Aluminium; Indium; Scandium, Yttrium, Lanthan, Cer; Chrom und Silicium, Germanium und Zinn; Titan und Zirkonium; Wismut; Vanadium, Niob und Tantal; Eisen und Kupfer. Obgleich Rhodium zu den Edelmetallen zählt, üben Rhodiumverbindungen eine Flussmittelwirkung aus.

Als Trägermedien kommen solche in Betracht, wie sie in vorbekannten Edelmetallpräparaten mit einem organischen oder organisch-wässrigen Medium bekannt sind. Üblicherweise umfasst das Trägermedium sowohl ein organisches Bindemittel als auch ein organisches, organisch-wässriges oder im wesentlichen rein wässriges Lösungsmittel. Die Zusammensetzung des Trägermediums sowie die Einsatzmenge desselben werden so ausgewählt, dass die organischen Edelmetallverbindungen und organischen Unedelmetallverbindungen darin klar löslich sind und das Präparat eine für die gewählte Anwendungsart geeignete Viskosität und gute Filmeigenschaften des getrockneten, aber noch nicht eingebrannten Films, aufweist. Vorzugsweise bilden die organischen Edelmetallverbindungen und organischen Unedelmetallverbindungen nach dem Trocknen noch ein homogenes System bzw. eine Lösung. Das oder die anwesenden Bindemittel sollen möglichst klar in dem anwesenden Lösungsmittel oder Lösungsmittelgemisch gelöst sein. Bekannte Bindemittel für Glanzedelmetallpräparate sind Polyacryl- und Polymethacrylharze, Polyvinylpyrrolidon, Celluloseether, wie Hydroxyalkyl-, Alkoxy- und Carboxyalkylcellulose, Polyamide, Polyalkylenglykole, wie Polyethylenglykol, Polyester, Polyacrylamide, Polyvinylacetat, Polyvinylalkohol, Alkydharze, Polyamine, Polyurethanharze, Kohlenwasserstoffharze, Harnstoff-Formaldehydharze, modifizierte Harnstoff-Formaldehydharze, Melaminharze, Alkydharze, Polyurethanharze oder Epoxidharze (oder deren Mischungen), sowie natürliche Harze und geschwefelte natürliche Harze, wie geschwefeltes Dammarharz. Asphalt, Kolophonium, Kolophoniumester, kolophoniummodifizierte Harze, Aminoharze auf natürlicher Basis, Nitrocellulose, Ketonharze, geschwefelte Terpenharze.

Edelmetallpräparate mit einem im wesentlichen organischen Trägermedium enthalten im allgemeinen 10 bis 40 Gew.-% eines oder mehrerer organischer-Lösungsmittel. Geeignet sind aliphatische, cycloaliphatische und aromatische Kohlenwasserstoffe, insbesondere alkylierte Aromaten, und Terpenkohlenwasserstoffe, Ketone, Alkohole und Ether; gut geeignet sind auch ätherische Öle.

Wirksame Bindemittelbestandteile sind auch Maleinsäure, modifizierte Kolophoniumharze sowie kolophoniummodifizierte Phenolharze. Als Bindemittel sind auch Wachse aus der Reihe der Fettalkohole, Fettamide, Polyolefinwachse und Polyalkylenglykole geeignet. Üblicherweise enthalten nicht-wässrige Glanzedelmetallpräparate ein organisches Trägermedium, enthaltend ein oder mehrere Bindemittel und ein oder mehrere organische Lösungsmittel in einer Gesamtmenge von etwa 20 bis 60 Gew.-%, bezogen auf das Präparat.

Die Glanzedelmetallpräparate lassen sich in üblicher Weise herstellen durch Homogenisieren der organischen Edelmetallverbindungen, Flussmittelverbindungen sowie des Lösungsmittel und/oder Bindemittel enthaltenden Trägermediums. Die Herstellung kann zusätzlich einen Schwefelungsschritt umfassen, wobei ungesättigte Bindemittel und/ oder Lösungsmittel sowie ggf. Edelmetallverbindungen über Schwefelbrücken vernetzt werden. Applikation und Brennbedingungen folgen.

Auch ist es möglich, durch Reaktionen und Zugaben von weiteren Harzen (synthetischen oder natürlichen Ursprungs - beispielsweise Asphalt) Präparate herzustellen, die optimiert und weiter verbessert bezüglich des Farbtons und der mechanischen und chemischen Beständigkeit der daraus erzeugten Dekore sind. Das gleiche gilt für die metallorganische Zusammensetzung. Dies betrifft sowohl den Bereich der Glanz- als auch der Lüster-, Polier- und Seidenmattpräparate.

Für die Formulierungen geeignete Polyaminoamide sind beispielsweise Aradur 100 BD oder Aradur 350 BD der Firma Vantico, Basel.

Das folgende Beispiel illustriert die Vorbehandlung des Polyaminoamids:

### Beispiel 1:

Eine Lösung aus 26 % Isopropanol, 24 % Ethylhexansäure und 50 % Polyamino-amidhärter Aradur 100 BD (Vantico) wird½ h lang bei 120 °C behandelt. Die resultierende Lösung wird direkt in einer Rezeptur für ein Edelmetallpräparat eingesetzt

Zur Illustration besonderer Ausführungsformen der Erfindung werden in weiteren Beispielen Rezepturen für Glanzedelmetallpräparate für Glas und Porzellan/Keramik beschrieben (%-Angaben in Gewichts-%).

| Beispiel 2: Für Porzellan | | % |
|---|---|---|
| Goldsulforesinat | (54% Au) | 22,2 |
| Silbersulforesinat | (52% Ag) | 2,88 |
| Rhodiumresinat gelöst in Pine-Oel | (5% Rh) | 2,0 |
| Siliciumresinat gelöst in Pine-Oel | (10% Si) | 1,5 |
| Wismutresinat | (10% Bi) | 0,5 |
| Polyaminoamidharz (50%lg in Lsg. gemäß Beispiel 1) | | 20,0 |
| Pine-Oel | | 48,60 |
| Thixotropiemittel | | 2,0 |
| Entschäumer | | 0,3 |

| | | |
|---|---|---|
| Beispiel 3: Für Glas | | % |
| Goldsulforesinat | (54% Au) | 22,2 |
| Silbersulforesinat | (52% Ag) | 2,88 |
| Rhodiumresinat gelöst in Pine-Öl | (5% Rh) | 2,0 |
| Siliciumresinat gelöst in Pine-Öl | (10% Si) | 1,5 |
| Chromhexanoat | (10% Cr) | 0,5 |
| Vanadiumresinat gelöst in Pine-Öl | (3% V) | 1,0 |
| Polyaminoamidharz (50%ig in Lsg. gemäß Beispiel 1) | | 20,0 |
| Pine-Öl | | 48,60 |
| Thixotropiemittel | | 2,0 |
| Entschäumer | | 0,3 |

Die so hergestellten Pasten werden mit einem 400 mesh Stahlgewebe gedruckt, getrocknet und mit einer Lackmaske (32er Polyestergewebe Lack L 406 von Heraeus) überlackiert. Nach der Trocknung der Lackmaske kann nach dem Applizieren das Dekor eingebrannt werden.

### Beispiel 4:

Umsetzung von Aradur 100 BD (Vantico) mit 2-Furancarbonsäure und anschließender Umsetzung und Reaktion mit den restlichen Pastenbestandteilen:

| | |
|---|---|
| Aradur 100 BD | 10.00% |
| Pineoel (Ausgleichskomponente) | 56,18% |
| Furancarbonsäure | 3,50% |

• Umsetzung bei 130°C für 30 min und anschließender Zugabe von

| | | |
|---|---|---|
| Goldsufforesinat | (54% Au) | 22.20 % |
| Silbersulforesinat | (52 % Ag) | 2,12 % |
| Rhodiumresinat gelöst in Pineoel | (5%Rh) | 1,00 % |
| Siliciumresinat gelöst in Pineoel | (10 % Si) | 2,00 % |
| Wismutresinat | (10% Bi) | 1,00 % |
| Geschwefeltes Dammarharz | | 2,00 % |

• Durch kurzzeitige Reaktion bei 125°C geliert die Paste

### Beispiel 5:

Umsetzung von Aradur 350 BD (Vantico) mit 2-Furancarbonsäure:

| | |
|---|---|
| Aradur 350 BD | 43.00 % |
| Furancarbonsäure | 4,80 % |
| Pineoel (Ausgleichskomponente) | 52,20 % |

### Reaktion bei 130°C für 30 min.

### Beispiel 6:

Umsetzung von Aradur 350 BD (Vantico) mit Dammarharz geschwefelt:

| | |
|---|---|
| Aradur 350 BD | 43,00 % |
| Geschwefeltes Dammarharz | 43,00 % |
| Pineoel (Ausgleichskomponente) | 7.00 % |

### Beispiel 7:

| | |
|---|---|
| Aradur 350 BD | 43,00 % |
| Natronlauge 50% ig | 10,00 % |
| Pineoel (Ausgleichskomponente) | 47.00 % |

### Beispiel 8

Die so herstellten Harzlösungen (Beispiele 5 bis 7) werden in folgende Rezeptur für Porzellan eingearbeitet: Herstellverfahren:

| | | |
|---|---|---|
| Goldsulforesinat | (54% Au) | 22.20 % |
| Silbersulforesinat | (52 % Ag) | 2,12 % |
| Rhodiumresinat gelöst in Pineoel | (5%Rh) | 1,00 % |
| Siliciumresinat gelöst in Pineoel | (10 % Si) | 2,00 % |
| Wismutresinat | (10% Bi) | 1,00 % |
| Pineoel (Ausgleich auf 100%) | | |
| Geschwefeltes Dammarharz | | 2,00 % |

Die oben genannten Komponenten werden bei 120 °C geliert. Nach Abkühlung wird das Harz zugegeben und homogenisiert:

| | |
|---|---|
| Polyaminoamidharz **(Beispiel 5, 6 oder 7)** | 20,00 % |

Die 3 Mischungen des Beispiels 8 werden mit einem 350 mesh Gewebe gedruckt, getrocknet und mit einer Lackmaske (32 er Polyestergewebe Lack L 406 von Heraeus) überlackiert, getrocknet und anschließend appliziert und eingebrannt.
Die auf diesem Weg hergestellten Pasten sind bezüglich ihrer Lagerfähigkeit (diese wird bei 80 °C im Trockenschrank als Schnelltest überprüft) ausgezeichnet und sind auch nach jahrelanger Lagerung verarbeitungsfähig.

## Patentansprüche

1. Edelmetallpräparat oder Lüsterpräparat, enthaltend mindestens ein Polyaminoamid, das durch eine Kondensationsreaktion zwischen einer polymeren Fettsäure und Polyethylenpolyamin erhältlich ist.

2. Edelmetallpräparat oder Lüsterpräparat gemäß Anspruch 1, wobei die Aminfunktionen des Polyaminoamids inaktiviert sind.

3. Edelmetallpräparat oder Lüsterpräparat gemäß Anspruch 2, wobei die Aminfunktionen des Polyaminoamids protoniert sind.

4. Edelmetallpräparat oder Lüsterpräparat nach einem der vorstehenden Ansprüche, enthaltend zusätzlich einen oder mehrere Stoff(e) aus der Gruppe Metallresinate, metallorganische Verbindungen, natürliche Harze, künstliche Harze, Harzöle, organische Farb- und Füllstoffe, Thixotropiemittel, Lösungsmittel und Entschäumer.

5. Edelmetallpräparat oder Lüsterpräparat nach einem der vorstehenden Ansprüche, bei dem der Polyaminoamidanteil von 3 bis 50 Gew.% beträgt.

6. Verwendung eines Edelmetallpräparates oder Lüsterpräparates nach einem der vorstehenden Ansprüche für den indirekten und direkten Siebdruck für silikatische Oberflächen wie Keramik-, Glas- oder Porzellan.

7. Keramisches Abziehbild enthaltend ein Edelmetallpräparat oder Lüsterpräparat nach einem der Ansprüche 1 bis 5.

## Claims

1. Noble metal preparation or lustre preparation containing at least one polyaminoamide which is obtainable by a condensation reaction between a polymeric fatty acid and polyethylene polyamine.

2. Noble metal preparation or lustre preparation according to claim 1, wherein the amine functions of the polyaminoamide are deactivated.

3. Noble metal preparation or lustre preparation according to Claim 2, wherein the amine functions of the polyaminoamide are protonated.

4. Noble metal preparation or lustre preparation according to any of the preceding claims, additionally containing one or more substance (s) from the group consisting of metal resinates, organometallic compounds, natural resins, synthetic resins, resin oils, organic dyes and fillers, thixotropic agents, solvents and antifoams.

5. Noble metal preparation or lustre preparation according to any of the preceding claims, in which the proportion of polyaminoamide is 3 to 50% by weight.

6. Use of a noble metal preparation or lustre preparation according to any of the preceding claims for indirect and direct screen printing for silicate surfaces, such as ceramic, glass or porcelain.

7. Ceramic decal containing a noble metal- preparation or lustre preparation according to any of Claims 1 to 5.

## Revendications

1. Préparation de métal précieux ou préparation de lustre contenant au moins un polyaminoamide qui peut être obtenu par une réaction de condensation entre un acide gras polymère et du polyéthylène polyamine.

2. Préparation de métal précieux ou préparation de lustre selon la revendication 1, dans laquelle les fonctions amine du polyaminoamide sont inactivées.

3. Préparation de métal précieux ou préparation de lustre selon la revendication 2, dans laquelle les fonctions amine du polyaminoamide sont protonées.

4. Préparation de métal précieux ou préparation de lustre selon l'une quelconque des revendications précédentes contenant en plus une ou plusieurs matières choisies parmi des résinates métalliques, des composés metallo-organiques, des résines naturelles, des résines synthétiques, des huiles de résines, des colorants et charges organiques, des agents thixotropes, des solvants et des antimousses.

5. Préparation de métal précieux ou préparation de lustre selon l'une quelconque des revendications précédentes, dans laquelle la part en polyaminoamide est comprise entre 3 et 50 % en poids.

6. Utilisation d'une préparation de métal précieux ou d'une préparation de lustre selon l'une quelconque des revendications précédentes pour la sérigraphie indirecte et directe destinée à des surfaces silicatées comme la céramique, le verre ou la porcelaine.

7. Image à décalquer céramique comprenant une préparation de métal précieux ou une préparation de lustre selon l'une quelconque des revendications 1 à 5.
